# EUROPÄISCHE PATENTSCHRIFT

(11) **EP 2 683 932 B1**
(45) Veröffentlichungstag und Bekanntmachung des Hinweises auf die Patenterteilung: **28.03.2018**
(21) Anmeldenummer: 12700276.4
(22) Anmeldetag: 11.01.2012
(51) Int. Cl.: F02M 37/00, F02D 41/20, F02M 51/06, F04B 23/00, F02M 65/00, F02D 41/22, F02M 61/16

(54) **VERFAHREN ZUM WIEDERBEFÜLLEN UND ÜBERPRÜFEN DER DICHTHEIT EINES KRAFTSTOFFINJEKTORS**
METHOD FOR REFILLING AND CHECKING THE LEAK-TIGHTNESS OF A FUEL INJECTOR
PROCÉDÉ DE REMPLISSAGE ET DE CONTRÔLE DE L'ÉTANCHÉITÉ D'UN INJECTEUR DE CARBURANT

(30) Priorität: 11.03.2011 DE 102011005428
(43) Veröffentlichungstag der Anmeldung: 15.01.2014
(73) Patentinhaber: Robert Bosch GmbH, 70442 Stuttgart (DE)
(72) Erfinder: KNOBLAUCH-XANDER, Marc, 71665 Vaihingen-Enz (DE); KOHLER, Bernd, 73730 Esslingen (DE)
(86) Internationale Anmeldenummer: PCT/EP2012/050352
(87) Internationale Veröffentlichungsnummer: WO 2012/123134

(56) Entgegenhaltungen:
- EP-A1- 2 226 494
- WO-A1-2004/040127
- DE-A1- 10 101 800
- DE-A1- 10 104 016
- DE-A1- 19 709 422
- DE-A1- 19 743 668
- DE-A1-102007 006 486
- GB-A- 2 149 011

## Beschreibung

Die Erfindung betrifft ein Verfahren zum Wiederbefüllen und zum Überprüfen der Dichtheit eines hydraulischen Kopplers, wie er in Kraftstoffinjektoren und insbesondere piezoelektrisch angetriebenen Kraftstoffinjektoren verwendet wird.

### Stand der Technik

Die Aufgabe der Injektoren in einem Kraftstoff-Einspritzsystem besteht darin, die vom Steuergerät angeforderte Kraftstoffmenge zu einem vorgegeben Zeitpunkt in den Brennraum des Motors einzuspritzen. Seit einigen Jahren sind Common-Rail Diesel-Einspritzsysteme mit sogenannten Piezo-Injektoren, die ein piezoelektrisch angetriebenes Aktormodul aufweisen, in Serieanwendung.

Eine der konstruktiven Besonderheiten von Piezo-Injektoren ist der hydraulische Koppler. Der hydraulische Koppler gleicht temperaturbedingte Längenänderungen des Aktormoduls aus. Eine Voraussetzung für die einwandfreie Funktion des Injektors ist, dass der Kopplerraum im Betrieb vollständig mit Kraftstoff gefüllt ist. Ein inkompressibles Flüssigkeitsvolumen im Kopplerraum ermöglicht dann die Kraftübertragung vom Aktor auf das Schaltventil des Injektors.

Eine weitere Voraussetzung für die einwandfreie Funktion des Injektors ist, dass im Rücklauf des Injektors ein Gegendruck anliegt. Der Gegendruck wird in der Regel durch ein Druckhalteventil (DHV) oder eine in der Rücklaufleitung des Injektors angeordnete Drossel erzeugt.

Falls der Kopplerraum nicht vollständig mit Kraftstoff gefüllt ist und sich stattdessen ein Luftpolster im Kopplerraum angesammelt hat, führt dies zu Beeinträchtigungen der Injektorfunktion. Infolge der Kompressibilität des Luft-/Kraftstoffgemisches im Kopplerraum wird die Kraftübertragung vom Aktor an das Schaltventil beeinträchtigt. In Abhängigkeit von der Größe der eingeschlossenen Luftmenge verkleinert sich die Einspritzmenge, im schlimmsten Fall wird die Einspritzmenge gleich Null. Dies führt dazu, dass der Motor nicht mehr lauffähig ist.

Der Lufteintrag kann z.B. durch Reparaturarbeiten am Kraftstoffsystem, durch Leerfahren des Tanks, Defekte am Druckhalteventil, Entgasungseffekte des Kraftstoffs oder eine fehlerhafter Montage/Lagerung des Injektors entstehen.

Sowohl fehlende Einspritzungen aufgrund eines entleerten Kopplers als auch mangelnder Gegendruck im Rücklauf führen zu Motoraussetzern und Nichtstartern. Beide Defekte können vom Steuergerät nicht erkannt werden. Dies erschwert die Fehlerlokalisierung erheblich.

Ebenso sind zahlreiche End-Off-Line-Fehlerfälle bekannt, bei denen Fahrzeuge aufgrund entleerter Koppler oder defekter Druckhalteventile nicht mehr gestartet werden können. Die nachfolgende Fehlersuche ist in solchen Fällen stets sehr aufwendig.

Um die Injektorfunktion wieder herzustellen und den Motor wieder zum Laufen zu bringen, bleibt in vielen Fallen als einzige Möglichkeit, entleerte Injektoren gegen Ersatzteile auszutauschen. Im Anlieferungszustand sind die Injektoren werksseitig mit einem Prüföl gefüllt, um die Injektorfunktion sicherzustellen.

GB 2 277 386 A beschreibt ein Diagnosesystem zum Erkennen von gestörten Kraftstoffinjektoren für einen Verbrennungsmotor mit einer Injektorsteuerung zum individuellen Ansteuern der Injektoren, die mit einem Kraftstoffverteiler verbunden sind. An dem Kraftstoffverteiler sind Drucksensoren angebracht, um Druckwellen, die sich aus dem Betrieb der einzelnen Injektoren ergeben, zu erkennen.

Eine Signalverarbeitungsvorrichtung ist vorgesehen, um die Drucksignale der Drucksensoren zu verarbeiten. Das Ausgangssignal der Signalverarbeitungsvorrichtung entspricht der Kraftstoffflussrate durch die Kraftstoffinjektoren. Solch ein Ausgangssignal kann genutzt werden, um einen Bediener des Motors über eine Fehlfunktion der Kraftstoffinjektoren zu informieren. Das Ausgangssignal kann auch einer Kraftstoffinjektor-Steuerungsvorrichtung zugeführt werden, um die Dauer der Betätigung der Injektoren so anzupassen, dass eine gewünschte Flussrate pro Aktivierung erreicht wird. WO 2004/040127 A zeigt bei einem Common Rail Einspritzsystem die Möglichkeit der Wiederbefüllung eines Niederdruckspeichers mittels der Förderpumpe.

### Offenbarung der Erfindung

Es ist eine Aufgabe der Erfindung, ein werkstatttaugliches Verfahren zur Verfügung zu stellen, um vollständig oder teilweise entleerte Koppler von Kraftstoffinjektoren wieder zu befüllen und/oder die Dichtheit des Injektors und des Rücklaufsystems zu überprüfen.

Ein erfindungsgemäßes Verfahren zum Wiederbefüllen eines entleerten hydraulischen Kopplers eines Kraftstoffinjektors umfasst die Schritte des Anschließens eines Druckerzeugers an eine Rücklaufleitung des Kraftstoffinjektors; des Betreibens des Druckerzeugers, um einen Rücklaufdruck in der Rücklaufleitung zu erzeugen; und schließlich des Betreibens des Kraftstoffinjektors mit dem erhöhten Rücklaufdruck in der Rücklaufleitung.

Mit dem erfindungsgemäßen Verfahren unter Verwendung eines Druckerzeugers kann insbesondere bei Einspritzsystemen mit Piezo-Kraftstoffinjektoren der für die Funktion notwendige Gegendruck im Injektor aufgebaut werden, wenn der Injektor zuvor entleert worden ist. Dadurch wird die Funktion des Injektors wieder hergestellt und der Motor wird wieder lauffähig. Entleerte Injektoren brauchen so nicht gegen Ersatzteile ausgetauscht werden.

Des Weiteren können Defekte im Rücklaufsystem der Injektoren, wie z.B. unzulässige Druckverluste am Druckhalteventil, erkannt werden.

Mit der Erfindung ist es möglich, den Fehler schnell einzugrenzen und ggf. defekte Komponenten gezielt auszutauschen und den Koppler wieder zu befüllen.

Die Anwendung der Erfindung ist einfach und der erforderliche Zeitbedarf niedrig. Durch die Erfindung können im Fehlerfall die enormen Kosten, die durch das Austauschen von Injektoren anfallen, eingespart werden.

In einer Ausführungsform des Verfahrens wird der Druckerzeuger derart betrieben, dass der Rücklaufdruck 5 bis 25 bar beträgt. Insbesondere wird durch geeignetes Betreiben des Druckerzeugers ein vorgegebener, gewünschter Rücklaufdruck im Bereich zwischen 5 und 25 bar erzeugt. Auf diese Weise kann der zu befüllende Injektor stets mit seinem optimalen Rücklaufdruck, der durch seine Konstruktion vorgegebenen ist, betrieben werden.

In einer Ausführungsform des Verfahrens wird der Rücklaufdruck während des Betriebs des Kraftstoffinjektors konstant gehalten. Auf diese Weise wird ein optimaler Betrieb des Kraftstoffinjektors gewährleistet.

In einer alternativen Ausführungsform wird in der Rücklaufleitung eine Druckwechselbelastung aufgebracht.

In einer Ausführungsform erzeugt der Druckerzeuger den erhöhten Druck in der Rücklaufleitung durch Komprimieren eines Gases, insbesondere Luft. Eine Druckerzeugung durch Komprimieren von Luft ist besonders einfach und kostengünstig realisierbar, da die Luft kostenfrei der Umgebung entnommen werden kann. Darüber hinaus gleicht die Kompressibilität des Gases unerwünschte Druckschwankungen in eine gewissen Umfang aus.

In einer weiteren Ausführungsform wird auf den Injektorrücklauf eine Druckschwellbelastung aufgebracht. Dadurch wird das Entlüften des Injektors optimiert bzw. je nach Bauart des Injektors überhaupt erst ermöglicht.

In einer alternativen Ausführungsform wird der Rücklaufdruck durch Komprimieren einer Flüssigkeit, z.B. von (Diesel-)Kraftstoff oder einem Prüföl, erzeugt. Da eine Flüssigkeit im Vergleich zu einem Gas praktisch nicht komprimierbar ist, kann ein erhöhter Druck besonders effizient erzeugt werden, da es nicht notwendig ist, die Flüssigkeit selbst zu komprimieren, um einen erhöhten Druck in der Rücklaufleitung zu erzeugen.

In einer Ausführungsform ist in der Rücklaufleitung ein Druckhalteventil vorgesehen und das erfindungsgemäße Verfahren schließt ein, die Funktion des Druckhalteventils zu überprüfen.

Durch ein Druckhalteventil in der Rücklaufleitung kann der Druck in der Rücklaufleitung stets auf den für den Betrieb des Kraftstoffinjektors optimalen Wert eingestellt werden, so dass der Kraftstoffinjektor besonders effektiv betreibbar ist.

Ein erfindungsgemäßes Verfahren ermöglicht es auch, ein derartiges Druckhalteventil besonders einfach und effizient zu überprüfen, um Fehlfunktionen der Kraftstoffinjektoren bzw. des Motors, die auf ein defektes Druckhalteventil zurückzuführen sind, zu erkennen und ggf. beseitigen zu können. Der Druckerzeuger weist ein Druckmessgerät (Manometer) auf, welches zur Überwachung des von dem Druckerzeuger erzeugten Drucks bzw. des Drucks in der Rücklaufleitung ausgebildet ist. Ein derartiges Druckmessgerät ermöglicht es, den gewünschten Druck in der Rücklaufleitung exakt einzustellen und insbesondere einen zu hohen Druck in der Rücklaufleitung, der zur Beschädigung von Komponenten des Einspritzsystems führen kann, zu vermeiden.

Zusätzlich kann der Druckerzeuger ein Überdruckventil aufweisen, das bei Überschreiten eines vorgegebenen Drucks automatisch öffnet, um einen gefährlichen Überdruck in der Rücklaufleitung zu vermeiden. Der Druck, bei dem ein derartiges Überdruckventil öffnet, kann z.B. 30 bar betragen, so dass ein Rücklaufdruck im Bereich von 5 bis 25 bar in der Rücklaufleitung eingestellt werden kann, ein erhebliches und gefährliches Überschreiten des höchsten gewünschten Rücklaufdrucks von 25 bar jedoch zuverlässig und automatisch vermieden wird.

Der Druckerzeuger kann einen elektrisch betriebenen Kompressor aufweisen, der ausgebildet ist, um den Überdruck in der Rücklaufleitung zu erzeugen. Ein elektrisch betriebener Kompressor ermöglicht es, den erhöhten Druck in der Rücklaufleitung besonders einfach und bequem zu erzeugen; insbesondere kann ein derartiger Kompressor über eine geeignete Steuerschaltung derart angesteuert werden, dass ein vorgegebener Druck in der Rücklaufleitung erzeugt wird.

Alternativ oder zusätzlich kann z.B. eine Handpumpe zur Druckerzeugung vorgesehen sein. Ein Druckerzeuger mit einer Handpumpe ist besonders kostengünstig und wartungsarm und ermöglicht es darüber hinaus, einen erhöhten Druck in der Rücklaufleitung auch ohne zusätzliche Stromversorgung, z. B. im Panneneinsatz, zu erzeugen.

Die Erfindung wird im Folgenden anhand der beigefügten Figuren näher erläutert.

Dabei zeigt:
Figur 1 eine schematische Ansicht eines Kraftstoffeinspritzsystems mit einem Druckerzeuger; und
Figur 2 den in der Rücklaufleitung mindestens erforderlichen Gegendruck als Funktion des Kraftstoffeinspritzdrucks und der Drehzahl des Motors.

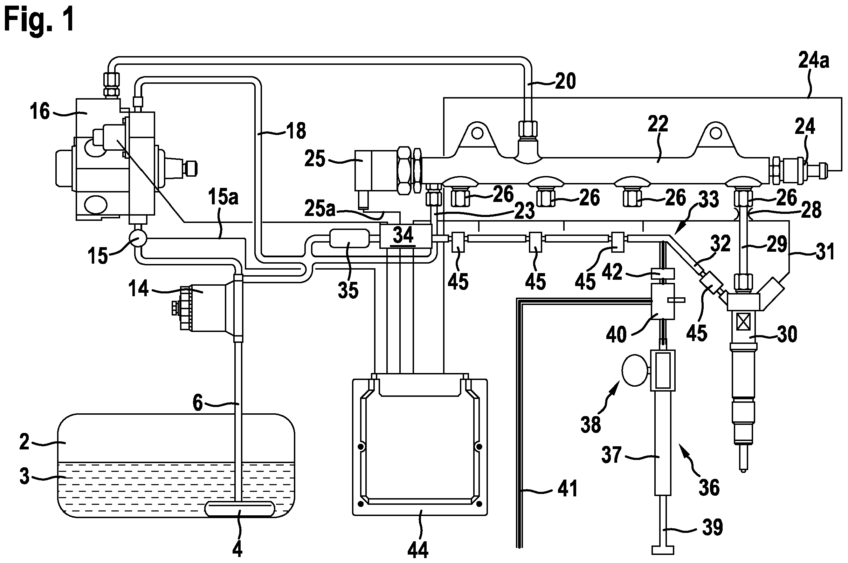

Figur 1 zeigt in einer schematischen Darstellung ein Ausführungsbeispiel eines Kraftstoffeinspritzsystems mit einem Druckerzeuger 36.

Das Einspritzsystem weist einen Tank 2 zur Speicherung des einzuspritzenden Kraftstoffs 3 auf.

Im Betrieb wird Kraftstoff 3 durch ein Vorfilter 4, das innerhalb des Tanks 2 angeordnet ist, und eine Kraftstoffentnahmeleitung 6 aus dem Tank 2 entnommen.

Der aus dem Tank 2 entnommene Kraftstoff 3 wird durch ein Kraftstofffilter 14 einer Kraftstoffpumpe 16, die vorzugsweise als Kraftstoffhochdruckpumpe 16 ausgebildet ist, zugeführt.

Zwischen dem Kraftstofffilter 14 und dem Eingang der Kraftstoffpumpe 16 ist eine Temperatursensor 15 vorgesehen, der die Temperatur des Kraftstoffs 3, der in die Kraftstoffpumpe 16 strömt, misst und den gemessenen Temperaturwert über eine Signalleitung 15a an ein Steuergerät 44 liefert.

Die Kraftstoffpumpe 16 setzt den Kraftstoff unter den gewünschten erhöhten Einspritzdruck und führt den unter erhöhtem Druck stehenden Kraftstoff über eine Druckleitung einem Kraftstoffverteiler ("Common-Rail") 22 zu.

Überschüssiger Kraftstoff wird über eine Rücklaufleitung 18 erneut dem Eingang der Kraftstoffpumpe 16 zugeführt.

Der Kraftstoffverteiler 22 ist im Wesentlichen röhrenförmig ausgebildet, wobei an den beiden Stirnseiten der Röhre 22 jeweils ein Drucksensor 24 bzw. ein Drucksteuerventil 25 angebracht sind. Der Drucksensor 24 und das Drucksteuerventil 25 sind über elektrische Steuerleitungen 24a, 25a mit dem Steuergerät 44 verbunden. Der Drucksensor 24 misst den Druck des Kraftstoffs 3 im Kraftstoffverteiler 22 und gibt ein entsprechendes elektrisches Signal an das Steuergerät 44 aus. Das Steuergerät 44 vergleicht den von dem Drucksensor 24 ermittelten Druck mit einem vorgegebenen, gewünschten Kraftstoffdruck im Kraftstoffverteiler 22 und regelt die Kraftstoffpumpe 16 und/oder das an einem gegenüberliegenden Ende des Kraftstoffverteilers 22 angeordnete Drucksteuerventil 25 derart, dass innerhalb des Kraftstoffverteilers 22 der gewünschte Kraftstoffdruck eingestellt wird. Überschüssiger Kraftstoff wird durch eine Ablaufleitung 23 aus dem Kraftstoffverteiler 22 abgeführt und erneut dem Eingang der Kraftstoffpumpe 16 zugeführt.

Am Umfang des röhrenförmigen Kraftstoffverteilers 22 sind mehrere, in dem in der Figur 1 gezeigten Beispiel vier, Anschlüsse 26 zum Anschließen jeweils eines Kraftstoffinjektors 30 ausgebildet.

In dem in der Figur 1 gezeigten Ausführungsbeispiel ist beispielhaft ein Kraftstoffinjektor 30 gezeigt, der über eine Drossel 28 und eine Kraftstoffleitung 29 hydraulisch mit dem Kraftstoffverteiler 22 verbunden ist.

Der Kraftstoffinjektor 30 wird über eine elektrische Steuerleitung 31, die mit dem Steuergerät 44 verbunden ist, angesteuert.

Eine Rücklaufleitung 32 ist über einen Injektoranschluss 45 mit dem Kraftstoffinjektor 30 verbunden und führt von dem Kraftstoffinjektor 30 zur Ausgangsseite des Kraftstofffilters 14, um überschüssigen Kraftstoff 3 aus dem Kraftstoffinjektor 30 zurück zur Eingangsseite der Hochdruckpumpe 16 zu führen, so dass er erneut in den Kraftstoffinjektor 30 eingebracht werden kann.

In der Rücklaufleitung 32 ist ein Druckhalteventil 35 vorgesehen, welches ausgebildet ist, um im Betrieb einen definierten Druck in der Rücklaufleitung 32 einzustellen und aufrecht zu erhalten.

In Strömungsrichtung vor dem Druckhalteventil 35 ist eine Abklemmvorrichtung 34, die z.B. als Matra-Klemme ausgebildet ist, vorgesehen. Die Abklemmvorrichtung 34 ermöglicht es, den Ablauf von Kraftstoff aus der Rücklaufleitung 32 zu Diagnosezwecken abzuklemmen bzw. unter einem bestimmten Druck zu halten, z. B. um Lecks in der Rücklaufleitung 32 oder in den Kraftstoffinjektoren 30 bzw. Defekte des Druckhalteventil 35 zu erkennen.

Der Druckerzeuger 36 wird an die Rücklaufleitung 32 angeschlossen. Der Anschluss kann mit Hilfe eines Adapters 33 zwischen einem Injektoranschluss 45 und der Rücklaufleitung 32 erfolgen Der Adapter 33 kann mit einem automatischen oder manuell zu betätigenden Ventil ausgebildet sein, um das Anschließen und Abnehmen des Druckerzeugers 36 ohne Druckverlust in der Rücklaufleitung 32 zu ermöglichen.

Ein Druckerzeuger 36 ist an die Rücklaufleitung 32 angeschlossen. Der Druckerzeuger 36 weist einen Druckzylinder 37 mit einem darin beweglichen Druckkolben 39 auf, wobei durch Bewegen des Druckkolbens 39 ein erhöhter Druck in dem Druckzylinder 37 erzeugbar ist. Der Druckzylinder 37 ist mit einem Gas, z. B. Luft, oder einer Flüssigkeit, z. B. (Diesel-)Kraftstoff oder einem geeigneten Prüföl, gefüllt.

Der Druckkolben 39 kann manuell (Handbetrieb) oder durch einen vorzugsweise elektrischen, in der Figur 1 nicht gezeigten, Motor angetrieben werden, um den Druck im Druckzylinder 37 zu erhöhen.

Es sind auch andere, nicht gezeigte, Formen eines Druckbehälters 37 möglich, in denen durch eine geeignete Pumpvorrichtung 39 ein erhöhter Druck erzeugt wird.

An dem Druckkolben 37 ist eine Druckmessvorrichtung 38 (Manometer) vorgesehen, an welcher der in dem Druckkolben 37 herrschende Druck ablesbar ist.

Die Druckmessvorrichtung 38 kann als elektrischer Druckmesser 38 ausgebildet sein.

Zwischen dem Druckkolben 37 und dem Adapter 33 ist ein Entlastungsventil 40 vorgesehen, welches derart ausgebildet ist, dass es öffnet und Gas bzw. Flüssigkeit aus dem Druckkolben 37 über eine Entlastungsleitung 41 ausströmen lässt, wenn ein vorgegebener Druck in dem Druckkolben 37 überschritten wird. Das Entlastungsventil 40 dient als Sicherheitsventil, um eine Beschädigung der Rücklaufleitung 32, des Kraftstoffinjektors 30 oder anderer Komponenten des Einspritzsystems durch einen zu hohen Druck in der Rücklaufleitung 32 zu verhindern.

Zwischen dem Entlastungsventil 40 und der Anschlussstelle 33 des Druckerzeugers 36 an der Rücklaufleitung 32 ist ein Filter 42 vorgesehen, um zu verhindern, dass Schmutzpartikel aus dem Druckkolben 37 in die Rücklaufleitung gelangen, wo sie zu Verstopfungen und ggf. Beschädigungen des Druckhalteventils 35 und/oder der Kraftstoffpumpe 16 führen können.

Um einen teilweise oder vollständig entleerten Injektor 30 wieder zu befüllen, wird der Druckerzeuger 36, wie in der Figur 1 gezeigt, mit Hilfe des Adapters 33 an die Rücklaufleitung 32 angeschlossen. Durch Betätigen des Druckkolbens 39 wird ein gewünschter erhöhter Druck im Druckkolben 37 und damit auch in der Rücklaufleitung 32 erzeugt. Das System erlaubt es dabei, den Druck in der Rücklaufleitung 32 bis zum maximalen Druck des Druckhalteventils 35 aufzubauen.

Der Druckaufbau in der Rücklaufleitung 32 bzw. im Druckkolben 37 kann dabei am Druckmessers 38 abgelesen und überwacht werden.

Nachdem der gewünschte Druck in der Rücklaufleitung 32 aufgebaut worden ist, wird der (in der Figur nicht gezeigte) Motor gestartet und Kraftstoff durch den Injektor 30 in die Brennkammer des Motors eingespritzt.

Bei Verwendung eines Kompressors zur Druckerzeugung kann das Druckniveau während des Startvorgangs ggf. durch Nachliefern von Gas bzw. Flüssigkeit in den Druckzylinder 37 konstant gehalten werden. Bei Handpumpen mit einem manuell bedienten Druckkolben 39 kann und muss ggf. noch einmal nachgepumpt werden.

Durch den so aufgebauten Druck in der Rücklaufleitung 32 wird ein Druckpolster im Koppler des Injektors 30 erzeugt, das zu einer "Versteifung" der Kopplereinheit führt. Dies gewährleistet eine Übertragung des Aktorhubs auf das Schaltventil innerhalb des Injektors 30 und der Injektor 30 ist wieder funktionsfähig.

Im Laufe des Betriebs wird die Luft, die sich im Koppler des Injektors 30 angesammelt hat, über die Rücklaufleitung 32 abgeführt, so dass der Injektor 30 nach einiger Betriebszeit auch ohne den zusätzlichen Druckerzeuger 36 betriebsfähig ist.

Das Druckmessgerät 38 des Druckerzeugers 36 kann gleichzeitig auch zur Überprüfung der Dichtheit und des "Schaltdrucks" des Druckhalteventils 35 genutzt werden.

Bei einem leckagebehafteten Druckhalteventil 35 bzw. Systemen, die statt eine Druckhalteventils 35 eine Drossel aufweisen, kann der Druckaufbau durch Abklemmen der Rücklaufleitung 32 mithilfe einer Abklemmvorrichtung 34 oder eines adaptierten Druckhalteventils erreicht werden. Die Abklemmvorrichtung 34 kann in Strömungsrichtung vor oder nach dem Original-Druckhalteventil 35 angeordnet sein.

Durch den Einsatz eines Druckerzeugers 36 in einem erfindungsgemäßen Verfahren kann ein teilweise oder vollständig entleerter Injektor 30 einfach und kostengünstig wieder befüllt werden; insbesondere können der Aufwand und die Kosten, die durch das Ein- und Ausbauen bzw. Austauschen eines Injektors 30 anfallen, eingespart werden. Gleichzeitig kann das Rücklaufsystem einschließlich des Injektors 30 auf Dichtheit überprüft werden.

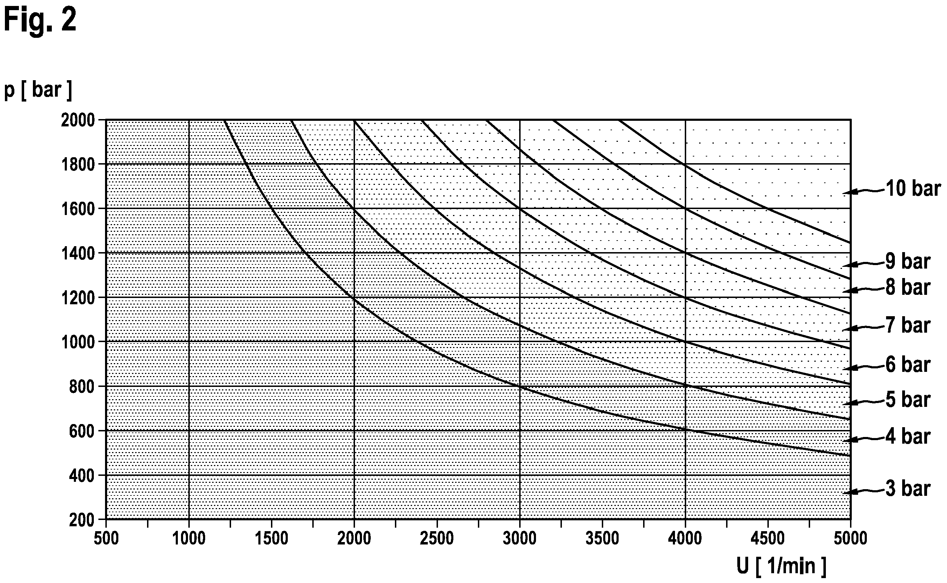

Figur 2 zeigt in einem Diagramm den für eine korrekte Funktion des Motors notwendigen Druck in der Rücklaufleitung 32 als Funktion der Drehzahl U (x-Achse) des Motors und dem Druck p (y-Achse) im Kraftstoffverteiler 22.

Das Diagramm zeigt, dass der in der Rücklaufleitung 32 erforderliche Druck sowohl mit der Drehzahl U des Motors als auch mit dem Druck p im Kraftstoffverteiler 22 ansteigt, so dass insbesondere hohe Drehzahlen U und hohe Drücke p im Kraftstoffverteiler 22 hohe Drücke von bis zu 10 bar in der Rücklaufleitung 32 erforderlich machen.

Bei niedrigen Drehzahlen U und/oder niedrigerem Druck p im Kraftstoffverteiler 22 ist dagegen ein geringerer Druck von bspw. 3 bar in der Rücklaufleitung 32 ausreichend.

## Patentansprüche

1. Verfahren zum Wiederbefüllen eines hydraulischen Kopplers eines Kraftstoffinjektors (30)
**dadurch gekennzeichnet, dass** das Verfahren die Schritte aufweist:
Anschließen eines Druckerzeugers (36) an eine Rücklaufleitung (32) des Kraftstoffinjektors (30), wobei der Druckerzeuger (36) einen Druckzylinder (37) und einen darin beweglichen Druckkolben (39) aufweist;
Erzeugen eines erhöhten Druck in der Rücklaufleitung (32) durch Betreiben des Druckerzeugers (36);
Betreiben des Kraftstoffinjektors (30).

2. Verfahren nach Anspruch 1, wobei der erhöhte Druck in der Rücklaufleitung (32) 5 bis 25 bar beträgt.

3. Verfahren nach Anspruch 1 oder 2, wobei der erhöhte Druck in der Rücklaufleitung (32) während des Betreibens des Kraftstoffinjektors (30) konstant gehalten wird.

4. Verfahren nach Anspruch 1 oder 2, wobei in der Rücklaufleitung (32) eine Druckwechselbelastung aufgebracht wird.

5. Verfahren nach einem der vorangehenden Ansprüche, wobei der erhöhte Druck in der Rücklaufleitung (32) durch Komprimieren eines Gases, insbesondere Luft, oder durch Komprimieren einer Flüssigkeit, beispielsweise Kraftstoff oder eines Prüföls, erzeugt wird.

6. Verfahren nach einem der vorangehenden Ansprüche, wobei in der Rücklaufleitung (32) ein Druckhalteventil (35) vorgesehen ist und das Verfahren einschließt, die Funktion des Druckhalteventils (35) zu überprüfen.

## Claims

1. Method for refilling a hydraulic coupler of a fuel injector (30),
**characterized in that** the method has the steps of:
connecting a pressure generator (36) to a return line (32) of the fuel injector (30), wherein the pressure generator (36) has a pressure cylinder (37) and a pressure piston (39) which is movable therein;
generating an elevated pressure in the return line (32) by operating the pressure generator (36);
operating the fuel injector (30).

2. Method according to Claim 1, wherein the elevated pressure in the return line (32) amounts to 5 to 25 bar.

3. Method according to Claim 1 or 2, wherein the elevated pressure in the return line (32) is kept constant during the operation of the fuel injector (30) .

4. Method according to Claim 1 or 2, wherein an alternating pressure load is applied in the return line (32) .

5. Method according to one of the preceding claims, wherein the elevated pressure in the return line (32) is generated by compression of a gas, in particular air, or by compression of a liquid, for example fuel or a test oil.

6. Method according to one of the preceding claims, wherein a pressure-holding valve (35) is provided in the return line (32), and the method includes testing the function of the pressure-holding valve (35).

## Revendications

1. Procédé de remplissage d'un coupleur hydraulique d'un injecteur de carburant (30),
**caractérisé en ce que** le procédé présente les étapes suivantes :
raccordement d'un générateur de pression (36) à une conduite de retour (32) de l'injecteur de carburant (30), le générateur de pression (36) présentant un cylindre de pression (37) et un piston de pression (39) déplaçable dans celui-ci ;
génération d'une pression accrue dans la conduite de retour (32) par activation du générateur de pression (36) ;
activation de l'injecteur de carburant (30).

2. Procédé selon la revendication 1, dans lequel la pression accrue dans la conduite de retour (32) est comprise entre 5 et 25 bars.

3. Procédé selon la revendication 1 ou 2, dans lequel la pression accrue dans la conduite de retour (32) est maintenue constante pendant le fonctionnement de l'injecteur de carburant (30).

4. Procédé selon la revendication 1 ou 2, dans lequel, dans la conduite de retour (32), est appliquée une charge de pression alternée.

5. Procédé selon l'une quelconque des revendications précédentes, dans lequel la pression accrue dans la conduite de retour (32) est générée par compression d'un gaz, en particulier de l'air, ou par compression d'un liquide, par exemple du carburant ou une huile de calibrage.

6. Procédé selon l'une quelconque des revendications précédentes, dans lequel une soupape de maintien de la pression (35) est prévue dans la conduite de retour (32) et le procédé inclut le contrôle du fonctionnement de la soupape de maintien de la pression (35).
